# EUROPEAN PATENT APPLICATION

(11) **EP 4 231 551 A1**
(43) Date of publication of application: **23.08.2023**
(21) Application number: 20957564.6
(22) Date of filing: 14.10.2020

(54) **COMPUTER SYSTEM AND SETTING METHOD**

(71) Applicant: Rakuten Symphony Singapore Pte. Ltd., Capitagreen 048946 (SG)
(72) Inventor: RATHINAM, Bharath, Tokyo 158-0094 (JP); PACHECO, Dulce, Tokyo 158-0094 (JP); ABHISHEK, Singh, Tokyo 158-0094 (JP); ATRI, Rahul, Singapore Pte. Ltd., 138 Market Street 32-01 Capitagreen 048946 (SG); KHANWILKAR, Kunal, Singapore Pte. Ltd., 138 Market Street 32-01 Capitagreen 048946 (SG)
(74) Representative: Betten & Resch
(86) International application number: PCT/IB2020/059635
(87) International publication number: WO 2022/079470

(57) **Abstract**

A reading apparatus 28 reads identification information of a communication apparatus from the communication apparatus delivered to a GC 16, and transmits the read identification information of the communication apparatus to an OSS 42. The OSS 42 checks whether or not the communication apparatus of the GC 16 is correctly connected to a predetermined counterpart apparatus base on the identification information of the communication apparatus, the identification information being transmitted from the reading apparatus 28. In a case where the communication apparatus of the GC 16 is correctly connected to the predetermined counterpart apparatus, the OSS 42 automatically reflects setting information of the communication apparatus of the GC 16 to the communication apparatus.

## Description

### [TECHNICAL FIELD]

The present disclosure relates to a data processing technique, and more particularly, to a computer system and a setting method in setting a group center (GC).

### [BACKGROUND ART]

In mobile communication, data of a user is transmitted in cooperation with communication apparatuses disposed in a base station, a GC, and a data center (hereinafter, also referred to as a central data center (CDC)). In the GC, for example, a large number of communication apparatuses including a central unit (CU) and a distributed unit (DU) which provide a radio access network (RAN) function are disposed (for example, refer to patent Literature 1).

### [CITATION LIST]

### [Patent Literature]

[Patent Literature 1] JP 2020-136788 A

### [SUMMARY OF INVENTION]

### [TECHNICAL PROBLEM]

In the conventional practice, it takes two to three days or more to set a communication apparatus in one GC, and it is required to shorten a setting period.

The present disclosure has been made in view of such a problem, and an object of the present disclosure is to provide a technique for efficiently setting the communication apparatus disposed in the GC.

### [SOLUTION TO PROBLEM]

In order to solve the above problem, a computer system according to an aspect of the present disclosure includes a reading apparatus disposed in a group center (GC) and an operation support system disposed in a place different from the GC. The reading apparatus reads identification information of a communication apparatus from the communication apparatus delivered to the GC and transmits the identification information of the communication apparatus to the operation support system, the operation support system checks whether or not the communication apparatus is correctly connected to a predetermined counterpart apparatus based on the identification information of the communication apparatus, the identification information being transmitted from the reading apparatus, and the operation support system automatically reflects setting information of the communication apparatus to the communication apparatus in a case where the communication apparatus is correctly connected to the predetermined counterpart apparatus.

Another aspect of the present disclosure is a setting method. The setting method is a setting method in a computer system including a reading apparatus disposed in a group center (GC), and an operation support system disposed in a place different from the GC, the method including: a step of causing the reading apparatus to read identification information of a communication apparatus from the communication apparatus delivered to the GC, and transmit the identification information of the communication apparatus to the operation support system, a step of causing the operation support system to check whether or not the communication apparatus is correctly connected to a predetermined counterpart apparatus based on the identification information of the communication apparatus, the identification information being transmitted from the reading apparatus, and a step of causing the operation support system to automatically reflect setting information of the communication apparatus to the communication apparatus in a case where the communication apparatus is correctly connected to the predetermined counterpart apparatus.

Note that an arbitrary combination of the above constituent elements and modifications of expressions of the present disclosure, such as an apparatus, a computer program, a recording medium in which the computer program is readably recorded, and the like are also effective as the aspect of the present disclosure.

### [ADVANTAGEOUS EFFECTS OF INVENTION]

According to the present disclosure, it is possible to efficiently set the communication apparatus disposed in the GC.

### [BRIEF DESCRIPTION OF DRAWINGS]

Fig. 1 is a diagram illustrating a configuration of a communication system according to an embodiment.
Fig. 2 is a sequence diagram illustrating operation of the communication system according to the embodiment.
Fig. 3 is a sequence diagram illustrating the operation of the communication system subsequent to Fig. 2.
Fig. 4 is a sequence diagram illustrating the operation of the communication system subsequent to Fig. 3.
Fig. 5 is a sequence diagram illustrating the operation of the communication system subsequent to Fig. 4.
Fig. 6 is a sequence diagram illustrating the operation of the communication system subsequent to Fig. 5.
Fig. 7 is a sequence diagram illustrating the operation of the communication system subsequent to Fig. 6.

### [DESCRIPTION OF EMBODIMENTS]

In the embodiment, a computer system (communication system 10 to be described later) that implements efficient setting (so-called Zero Touch Provisioning (ZTP)) of a communication apparatus disposed in a GC of a mobile network operator (MNO) network is proposed. The GC is a station that accommodates subscriber lines, that is, a subscriber switching station that aggregates lines from subscriber phones in a predetermined area. The GC is a data center located physically close to a subscriber, and can also be referred to as an "edge data center".

The computer system (communication system 10 to be described later) of the embodiment automates a process of commissioning in the GC end-to-end. Specifically, the computer system (communication system 10 to be described later) of the embodiment automates setup and validation for each of a plurality of types of communication apparatuses and network functions (TOR 20, server 22, OOB 24, vDU 36, vCU 38, and the like to be described later) which are disposed in the GC. Note that the communication apparatus means a data processing apparatus having a communication function, and includes, for example, a relay apparatus such as a switch or a router, and also includes an information processing apparatus such as a server.

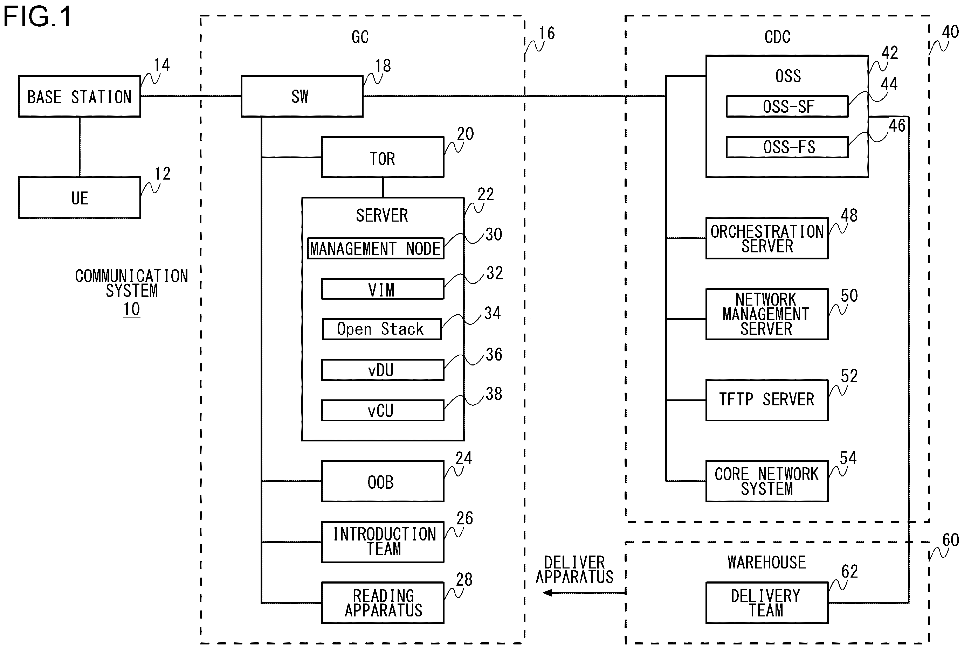

Fig. 1 is a diagram illustrating a configuration of the communication system 10 according to the embodiment. The communication system 10 includes a user equipment (UE) 12, a base station 14, a switch (SW) 18, a Top Of Rack (TOR) 20, a server 22, an Out Of Band (OOB) 24, an introduction team 26, a reading apparatus 28, an operation support system (OSS) 42, an orchestration server 48, a network management server 50, a Trivial File Transfer Protocol (TFTP) server 52, a core network system 54, and a delivery team 62. The introduction team 26 and the delivery team 62 are groups of people, respectively. The apparatuses excluding these groups of people are connected via a wireless or wired communication network. Although one GC 16 is illustrated in Fig. 1, the real communication system 10 includes a plurality of GCs 16.

The UE 12 is a mobile communication terminal operated by a user (subscriber) who has made a contract with the mobile network operator, and is, for example, a smartphone or a tablet terminal. The base station 14 executes wireless communication by being wirelessly connected to the UE 12.

The SW 18, the TOR 20, the server 22, the OOB 24, the introduction team 26, and the reading apparatus 28 are disposed in the GC 16. A plurality of the SWs 18, TORs 20, servers 22, OOBs 24, and reading apparatuses 28 may be disposed in the GC 16. The SW 18 is, for example, a layer 2 switch connected to an external network of the GC 16. The TOR 20 is, for example, a layer 2 switch provided in a rack in which a plurality of the servers 22 are stored.

The OOB 24 is a layer 2 switch connected to a management and/or monitoring network. The introduction team 26 includes a worker who performs installation work and setting work of the communication apparatus in the GC 16. The introduction team 26 may carry an information processing apparatus (a PC, a tablet terminal, or the like) operated by a worker. The information processing apparatuses are connected to the SW 18 via the wireless or wired communication network. The reading apparatus 28 is an information processing apparatus having a scanner function and a communication function.

The server 22 is an information processing apparatus that executes various data processing in the GC, and is also called a stock keeping unit (SKU). The server 22 includes a management node 30, a virtualized infrastructure manager (VIM) 32, an OpenStack 34, a virtual distributed unit (vDU) 36, and a virtual central unit (vCU) 38 as a plurality of functional blocks.

A plurality of the functional blocks can be configured by a circuit block, a memory, or another LSI as hardware, and are realized by a CPU executing a program loaded in the memory as software. Therefore, it is understood by those skilled in the art that these functional blocks can be realized in various forms by only hardware, only software, or a combination thereof, and the functional blocks are not limited to any of them.

In the embodiment, a computer program in which a module corresponding to each of a plurality of the functional blocks is incorporated is installed in a storage of the server 22 via a network. The CPU of the server 22 reads the computer program corresponding to each of the functional blocks into a main memory and executes the computer program, thereby exerting a function corresponding to each of the functional blocks. Note that the computer program described above may be stored in a predetermined recording medium or may be installed in the storage of the server 22 via the recording medium.

The management node 30 is also referred to as a VIM management node, and is installed in one of a plurality of the servers 22 disposed in the GC 16. The management node 30 manages and controls operation of VIM in a plurality of the servers 22 disposed in the GC 16. The VIM 32 is a system that manages a physical machine and a virtual machine as a network resource. The OpenStack 34 is software for constructing a foundation of cloud computing, and integrally manages the virtual machine, the storage, the network, and the like.

The vDU 36 and the vCU 38 are software that provide a function of a virtualized RAN (that is, a virtual RAN (vRAN)). The vDU 36 is software that provides a function of a DU (remote station). The vCU 38 is software that provides a function of a CU (aggregation base station).

The OSS 42, the orchestration server 48, the network management server 50, the TFTP server 52, and the core network system 54 are disposed in a CDC 40. The CDC 40 is a data center that is connected to a plurality of the GCs 16 via the communication network and processes data related to a plurality of the GCs. For example, the CDC 40 is a data center that aggregates and processes communication data received in a plurality of the GCs. Functions of a system and server disposed in the CDC 40 may be virtualized, and a physical hardware configuration in the CDC 40 is not limited.

The OSS 42 is an information processing system that supports the operation of the entire communication system 10. The OSS 42 includes an OSS-Siteforge (SF) 44 and an OSS-Foresight (FS) 46. "Siteforge" and "Foresight" are product names and are trademarks or registered trademarks. In the embodiment, the OSS-SF 44 and the OSS-FS 46 are implemented as different software modules, but may be implemented as a single software module.

The orchestration server 48 is an information processing apparatus that provides an orchestration function related to setup of the communication apparatus of the GC 16. The network management server 50 is an information processing apparatus that manages network information in the GC 16. The network management server 50 has a function of a dynamic host configuration protocol (DHCP) server. The TFTP server 52 is an information processing apparatus that functions as a file server.

The core network system 54 is a computer system that provides a core network function of long term evolution (LTE) or the fifth generation mobile communication system (hereinafter, referred to as "5G"). For example, the core network system 54 may include functions such as Unified Data Management (UDM), Access and Mobility Management Function (AMF), and Session Management Function (SMF).

In the communication system 10, communication data transmitted from the UE 12 is transmitted to an external network (the Internet or the like) via the base station 14, the vDU 36 and vCU 38 of the GC 16, and the core network system 54 of the CDC 40.

A warehouse 60 is a warehouse that stores the communication apparatuses (TOR 20, the server 22, and the like.) before delivery. The delivery team 62 is disposed in the warehouse 60. The delivery team 62 includes a worker who performs work related to delivery of the communication apparatus to the GC 16. The delivery team 62 may carry an information terminal (PC, a tablet terminal, or the like) operated by the worker. The information processing apparatuses are connected to the OSS 42 via the wireless or wired communication network.

Hereinafter, the operation related to setting of the communication apparatus in the GC 16 will be described.

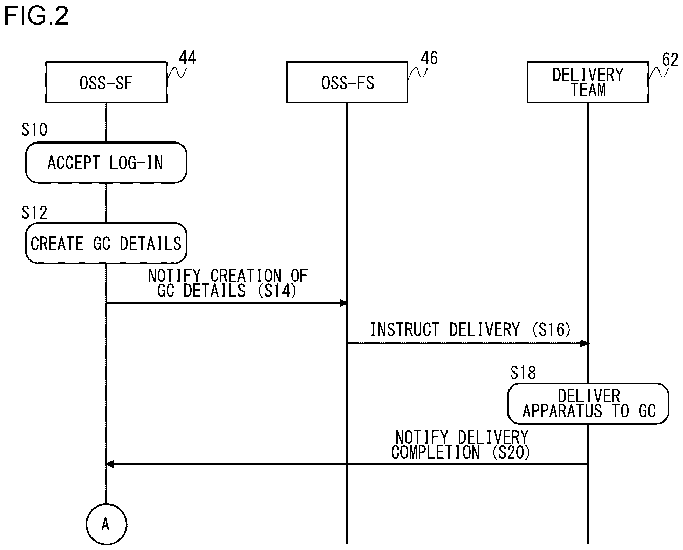

Fig. 2 is a sequence diagram illustrating the operation of the communication system 10 according to the embodiment. The OSS-SF 44 accepts log-in of a person in charge of GC setting work (S10). The OSS-SF 44 generates GC detailed data related to the GC to be constructed (hereinafter, referred to as "GC 16") according to the operation of the person in charge (S12). The OSS-SF 44 stores the GC detailed data in a storage unit (database or the like) of the OSS 42. Note that the storage unit may be a storage apparatus provided outside the OSS 42.

The GC detailed data includes a name, a type, an ID, and position information of the GC 16. Furthermore, the GC detailed data includes IDs of one or more PODs (Point Of Delivery) disposed in the GC 16. Each of the PODs is a group of the communication apparatuses disposed in the GC 16. For example, the POD may be a set of one TOR 20 and a plurality of the servers 22. The GC type of the GC detailed data is associated in advance with (1) the types and number of the communication apparatuses to be installed in the GC, (2) a connection mode of a plurality of the communication apparatuses in the GC (for example, which communication apparatuses are connected to each other), and (3) a mode of one or more PODs provided in the GC. In other words, the GC type is information for uniquely identifying the above (1) to (3) .

The OSS-SF 44 notifies the OSS-FS 46 that the GC detailed data has been created (S14). The OSS-FS 46 notifies the delivery team 62 of a delivery instruction of the communication apparatus (S16). For example, the OSS-FS 46 may transmit an e-mail including the delivery instruction of the communication apparatus to the information terminal of the delivery team 62. The delivery team 62 identifies the type and number of each of the communication apparatuses for a plurality of the communication apparatuses to be disposed in the GC 16 based on the GC detailed data (GC type or the like) of the GC 16 stored in the OSS 42. The delivery team 62 delivers a plurality of the communication apparatuses to be disposed in the GC 16 to the GC 16 (S18). The delivery team 62 (information terminal of the delivery team 62) notifies the OSS-SF 44 of the completion of delivery of the communication apparatus.

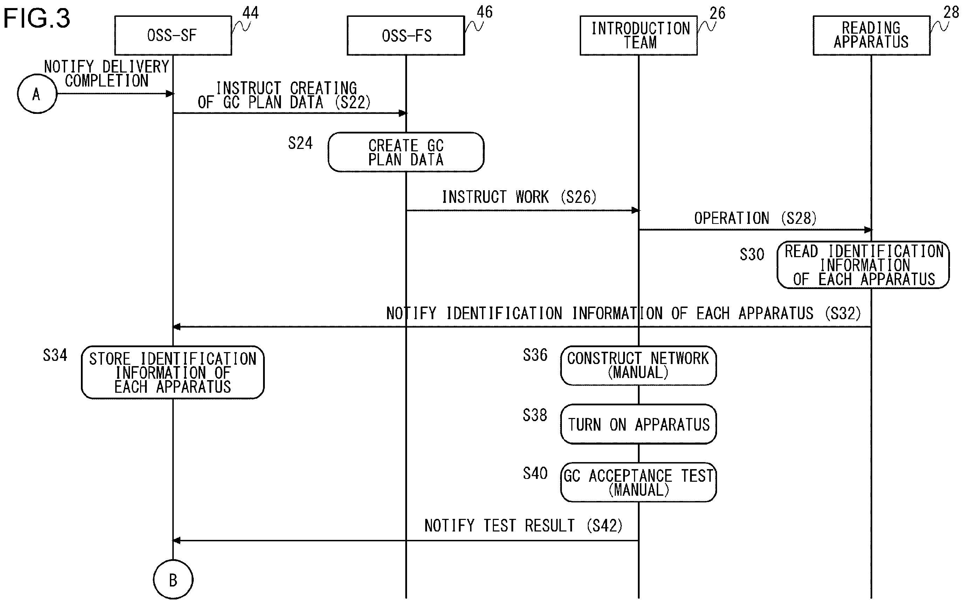

Fig. 3 is a sequence diagram illustrating the operation of the communication system 10 subsequent to Fig. 2. When the delivery completion notification is received, the OSS-SF 44 transmits a creation instruction of GC plan data to the OSS-FS 46 (S22). The OSS-FS 46 identifies the type and number of each of the communication apparatuses for a plurality of the communication apparatuses to be disposed in the GC 16 based on the GC detailed data (GC type or the like) of the GC 16 stored in advance. The OSS-FS 46 generates GC plan data including attribute information regarding each of the communication apparatuses disposed in the GC 16 (S24). The attribute information includes an IP address and a host name assigned to each of the communication apparatuses.

The storage unit of the OSS 42 stores the IP address and the host name which have been allocated to the existing communication apparatus disposed in the existing GC. When creating the GC plan data, the OSS-FS 46 automatically allocates an unallocated (that is, unique) IP address and an unallocated host name to the existing communication apparatus to each of the communication apparatuses disposed in the GC 16 with reference to the storage unit described above. Accordingly, it is possible to reliably avoid overlapping (in other words, conflict) of the IP address with the host name in the communication system 10. The OSS-FS 46 notifies the introduction team 26 of the GC 16 of an instruction of network construction work in the GC 16 (S26). The OSS-FS 46 may transmit an e-mail including the instruction of the work to the information processing apparatus of the introduction team 26.

The introduction team 26 operates the reading apparatus 28 to cause the reading apparatus 28 to read the information of each of the communication apparatuses delivered to the GC 16 (S28). Here, the information to be read is physical identification information allocated to a physical entity or individual of each of the communication apparatuses, and includes a product code and a MAC address. Specifically, the reading apparatus 28 reads the physical identification information (product code, MAC address, and the like) of each of the communication apparatuses from a label attached to each of the communication apparatuses (TOR 20, server 22, and the like) by a scanner function (S30). The information to be read is, for example, a barcode or a two-dimensional code. The information to be read may be an imprint of a number or electronic information (electronic data) obtained from an RF tag. The reading apparatus 28 transmits the physical identification information of each of the communication apparatuses, which is read from each of the communication apparatuses to the OSS-SF 44 (S32). The OSS-SF 44 stores the physical identification information of each of the communication apparatuses disposed in the GC 16, the physical identification information being transmitted from the reading apparatus 28, in the storage unit of the OSS 42 (S34) .

Based on the GC detailed data (GC type or the like) obtained with reference to the GC detailed data of the GC 16 stored in the OSS-SF 44, the introduction team 26 of the GC 16 connects a plurality of the communication apparatuses delivered to the GC 16 via a communication cable, and constructs a network of the GC 16 (S36). The introduction team 26 turns on power of a plurality of the communication apparatuses disposed in the GC 16 (S38). The introduction team 26 manually conducts a GC acceptance test (S40) .

The manual GC acceptance test is work for a person to check whether physical configurations of a plurality of the communication apparatuses disposed in the GC 16 are correct. For example, the manual GC acceptance test includes checking whether (1) the communication cable is correctly connected to the communication apparatus, (2) the label is correctly attached to each of the communication apparatuses, and (3) an indicator lamp (such as an LED) provided in each of the communication apparatuses is operating normally (lighting or the like). The introduction team 26 (information terminal of the introduction team 26) transmits the result of the manual GC acceptance test to the OSS-SF 44 (S42).

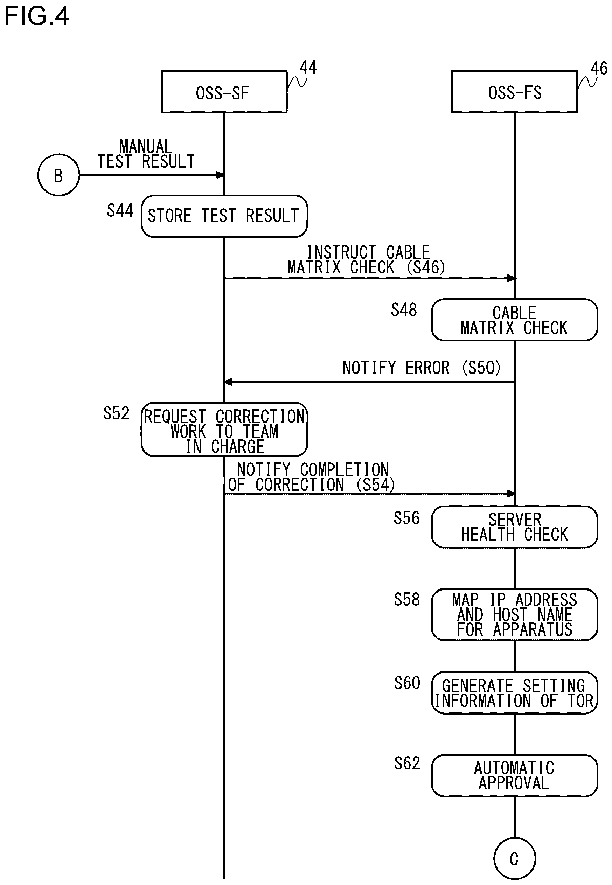

Fig. 4 is a sequence diagram illustrating the operation of the communication system 10 subsequent to Fig. 3. The OSS-SF 44 stores the result of the manual GC acceptance test, which is notified from the introduction team 26, in the storage unit of the OSS 42 (S44). The OSS-SF 44 instructs the OSS-FS 46 to perform a cable matrix check (S46). The OSS-FS 46 checks whether or not each of the communication apparatuses of the GC 16 is correctly connected to a predetermined counterpart apparatus (i.e. a predetermined opposing apparatus) as the cable matrix check based on the physical identification information of a plurality of the communication apparatuses disposed in the GC 16, the physical identification information being transmitted from the reading apparatus 28 (S48).

Specifically, the OSS-FS 46 maps which apparatus (MAC address) is connected to which port for each of a plurality of the communication apparatuses (TOR 20, server 22, and the like) disposed in the GC 16 by using Cisco Discovery Protocol (CDP). Furthermore, the OSS-FS 46 checks whether or not each of the communication apparatuses of the GC 16 is correctly connected to a predetermined counterpart apparatus, that is, whether or not the connection state is suitable to the GC type of the GC 16 based on the product code and MAC address of each of a plurality of the communication apparatuses disposed in the GC 16 and the result of the mapping.

In a case where an error is detected in the cable matrix check, that is, in a case where it is detected that the connection of the communication apparatus in the GC 16 is incorrect, the OSS-FS 46 notifies the OSS-SF 44 of the error (S50). The OSS-SF 44 allocates a correction task to a team in charge of error correction (S52). For example, the team to which the correction task is allocated corrects the connection state of the communication apparatus in the GC 16. The OSS-SF 44 notifies the OSS-FS 46 that the error correction has been completed (S54).

As will be described later, in a case where the cable matrix check is successful (including a case where an error is corrected), in other words, in a case where each of the communication apparatuses of the GC 16 is correctly connected to a predetermined counterpart apparatus, the OSS-FS 46 executes automatic commissioning processing of automatically reflecting the setting information of each of the communication apparatuses in the GC 16 to each of the communication apparatuses. In this manner, by executing the automatic commissioning processing on condition that the connection state of the communication apparatus disposed in the GC 16 is correct, it is possible to suppress occurrence of an error after starting the automatic commissioning processing and occurrence of rework associated with correction of the error.

The description returns to Fig. 4. In a case where the cable matrix check is successful or in a case where the completion of the error correction is notified, the OSS-FS 46 executes automatic health check processing related to the server 22 (S56). The automatic health check processing includes checking normality of a memory, a disk size, and a power status. In a case where abnormality is detected in the automatic health check processing, the OSS-FS 46 notifies the OSS-SF 44 of the detected abnormality, similarly to the time of the abnormality detection in the cable matrix check. The OSS-SF 44 requests a predetermined team to handle the abnormality, and shifts the server 22 to a normal state.

The OSS-FS 46 allocates the IP address and host name indicated by the GC plan data generated in S24 to each of a plurality of the servers 22 disposed in the GC 16 (S58). The OSS-FS 46 generates setting information of the TOR 20 based on the GC type of the GC 16, the IP address and host name of each of the communication apparatuses of the GC 16, and the result of the cable matrix check (for example, data indicating which apparatus is connected to which port) (S60). The setting information of the TOR 20 may include, for example, a host name of the TOR 20, data of a MAC address table, data of an ARP table, data related to a VLAN, and data related to priority control. The OSS-FS 46 automatically approves execution of the automatic commissioning processing for the TOR (S62). By performing the automatic approval, it is possible to avoid erroneous input of "rejection" due to manual intervention and waste of time associated with the input of the "rejection".

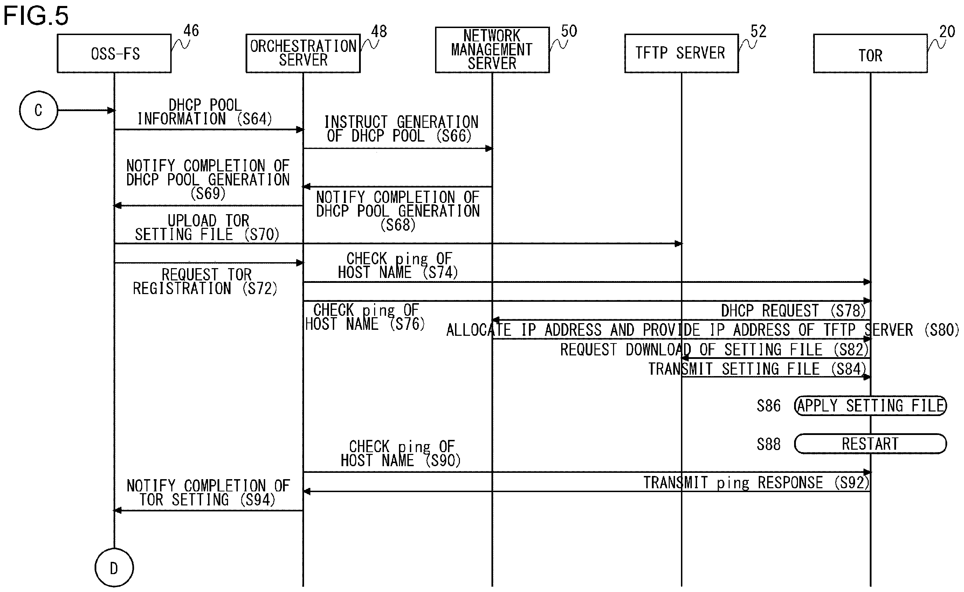

Fig. 5 is a sequence diagram illustrating the operation of the communication system 10 subsequent to Fig. 4. Fig. 5 illustrates a flow of the automatic commissioning processing of one TOR 20. In a case where a plurality of the TORs 20 are disposed in the GC 16, generation of setting information of each TOR 20, automatic approval, and the automatic commissioning processing of Fig. 5 may be executed in parallel. Furthermore, the generation of the setting information, the automatic approval, and the automatic commissioning processing may be similarly executed (or executed in parallel) for the server 22 (or a plurality of the servers 22) disposed in the GC 16. Furthermore, the generation of the setting information, the automatic approval, and the automatic commissioning processing may be similarly executed (or executed in parallel) for the OOB 24 (or a plurality of the OOBs 24) disposed in the GC 16. With the automatic commissioning processing, a plurality of the GCs scattered all over the country can be set up and validated simultaneously and frequently without a regional limitation.

The OSS-FS 46 transmits data of a DHCP pool including the IP address allocated to the TOR 20, the IP address of the TFTP server 52, and a file name of a TOR setting file to be described later to the orchestration server 48 (S64). The orchestration server 48 instructs the network management server 50 to generate the DHCP pool (S66). The network management server 50 generates the DHCP pool and notifies the orchestration server 48 of the completion of generating the DHCP pool (S68). The orchestration server 48 notifies the OSS-FS 46 of the completion of generating the DHCP pool (S69).

The OSS-FS 46 uploads the file (also referred to as "TOR setting file") including the setting information of the TOR 20 (such as the host name of the TOR 20), which is generated in S60, to the TFTP server 52 (S70). The OSS-FS 46 transmits a TOR registration request to the orchestration server 48 (S72). When receiving the TOR registration request, the orchestration server 48 transmits a ping request specifying the host name of the TOR 20 to the TOR 20 (network of the GC 16) (S74). The orchestration server 48 repeats the ping request periodically (for example, every 15 minutes) (S76) .

The TOR 20 transmits a DHCP discover/request to the network management server 50 (S78). The network management server 50 transmits a DHCP offer/ACK including the IP address allocated to the TOR 20, the IP address of the TFTP server 52, and the file name of the TOR setting file to the TOR 20 (S80). The TOR 20 transmits a download request of the TOR setting file specifying the file name of the TOR setting file included in the DHCP offer/ACK to the TFTP server 52 (S82). The TFTP server 52 transmits the TOR setting file identified with the file name specified in the download request to the TOR 20 (S84).

The TOR 20 reflects the setting information indicated by the TOR setting file provided from the TFTP server 52 to the TOR 20 itself. For example, the TOR 20 may set the host name included in the setting information to the environment data of the TOR 20 itself, and store various table data included in the setting information in the storage unit of the TOR 20 itself. The TOR 20 is autonomously restarted (S88). The TOR 20 after the restart executes the operation reflecting the setting information indicated by the TOR setting file.

The orchestration server 48 transmits the ping request specifying the host name of the TOR 20 to the TOR 20 (network of the GC 16) (S90). The TOR 20 transmits a ping response to the orchestration server 48 (S92). When receiving the ping response from the TOR 20, the orchestration server 48 notifies the OSS-FS 46 of completion of setting the TOR 20 (S94).

As described above, by periodically checking the reachability of communication to the communication apparatus of the GC 16 (TOR 20 in Fig. 5), the orchestration server 48 detects that the setting information of the communication apparatus is reflected in the communication apparatus and notifies the OSS 42 that the setting information of the communication apparatus is reflected in the communication apparatus. As will be described later, in a case where the OSS 42 is notified that the setting information of the communication apparatus is reflected in the communication apparatus, the OSS 42 automatically executes the GC acceptance test including checking of the reachability of the communication to the communication apparatus. As a result, a remote automatic test for the communication apparatus disposed in the GC 16 can be executed at appropriate timing.

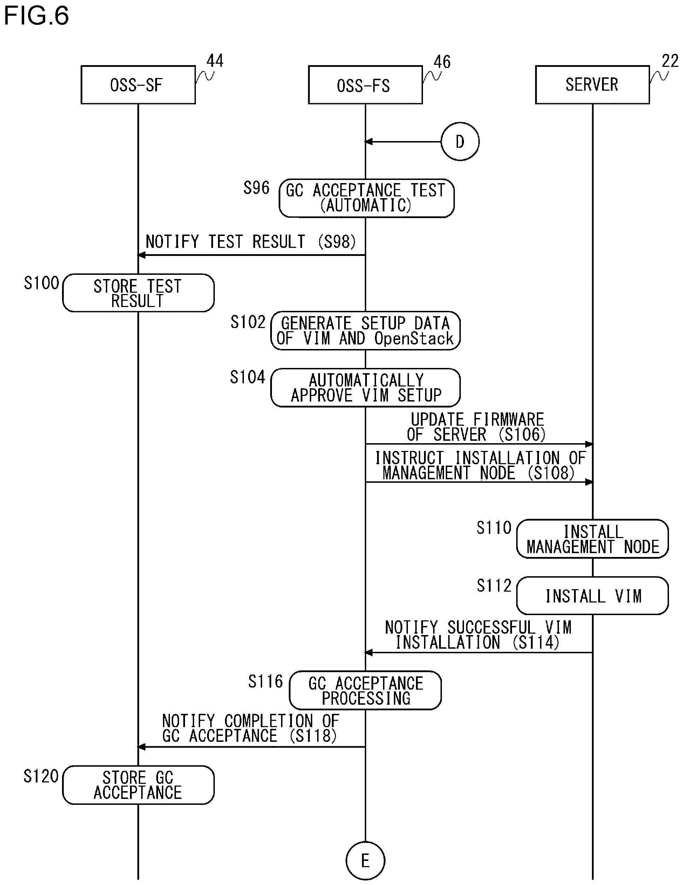

Fig. 6 is a sequence diagram illustrating the operation of the communication system 10 subsequent to Fig. 5. When the setting completion of the TOR 20 (completion of the automatic commissioning processing) is notified, the OSS-FS 46 automatically executes the GC acceptance test (S96). In a case where the automatic commissioning processing is executed to a plurality of the communication apparatuses disposed in the GC 16, the OSS-FS 46 may execute the GC acceptance test on condition that it is notified that the automatic commissioning processing to all the communication apparatuses which are targets of the automatic commissioning processing is completed.

The GC acceptance test includes an OOB 24 acceptance test performed with a remote login to the OOB 24 and a TOR 20 acceptance test performed with a remote login to the TOR 20. The OOB 24 acceptance test includes (1) validation of a software version of the OOB 24 (whether the version is the latest version or a version compatible with the GC type), (2) checking whether the port is in a connected state, and (3) a ping test for an external apparatus. The TOR 20 acceptance test includes (1) validation of a software version of the TOR 20 (whether the version is the latest version or a version compatible with the GC type), (2) checking a temperature state, (3) checking whether the port is in a connected state, (4) a ping test for an external apparatus, and (5) validation of an alarm.

The OSS-FS 46 transmits the result of the GC acceptance test to the OSS-SF 44 (S98). The OSS-SF 44 stores the result of the GC acceptance test in the storage unit of the OSS 42 (S100). The OSS-FS 46 generates setup data of the VIM 32 and the OpenStack 34 based on the GC detailed data created in S10, the GC plan data generated in S24, the physical identification information of each of the communication apparatuses stored in S34, and the like (S102). For example, the OSS-FS 46 may generate the setup data of the VIM 32 and the OpenStack 34 by setting the IP address indicated by the GC plan data, the MAC address of each of the communication apparatuses, and the like as parameters with respect to a template of the setup data corresponding to the GC type indicated by the GC detailed data.

The OSS-FS 46 automatically approves the setup of the VIM 32 (S104). The OSS-FS 46 remotely logs in to the server 22 and updates firmware of the server 22 (S106). The update of the firmware includes updating of a field programmable gate array (FPGA), a solid state drive (SSD), a network interface card (NIC), a basic input/output system (BIOS), and a firewall.

The OSS-FS 46 transmits an installation instruction of the management node 30 (VIM management node) to the server 22 (S108). The server 22 installs the management node 30. The OSS-FS 46 installs the management node 30 in one server 22 among a plurality of the servers 22 disposed in the GC 16. The management node 30 installed in one server 22 of the GC 16 installs the VIM 32 in a plurality of the servers 22 of the GC 16 (S112).

When the installation of the VIM 32 is successful, each of a plurality of the servers 22 disposed in the GC 16 notifies the OSS-FS 46 of the successful installation of the VIM 32 (S114). When the successful installation of the VIM 32 is notified from all the servers 22 disposed in the GC 16, the OSS-FS 46 executes the GC acceptance processing (S116). The OSS-FS 46 notifies the OSS-SF 44 of the completion of the GC acceptance (S118). The OSS-SF 44 stores information indicating the completion of the GC acceptance in the storage unit of the OSS 42 (S120).

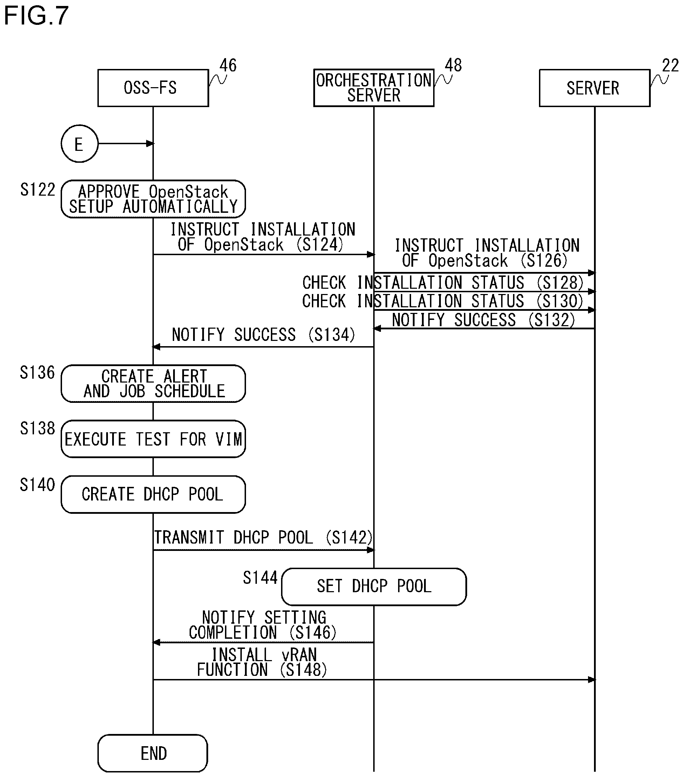

Fig. 7 is a sequence diagram illustrating the operation of the communication system 10 subsequent to Fig. 6. When the GC acceptance processing in S116 is completed, the OSS-FS 46 automatically approves start of the setup of the OpenStack 34 (S122). The OSS-FS 46 transmits data instructing installation of the OpenStack 34 to the orchestration server 48 (S124). The orchestration server 48 instructs the server 22 to install the OpenStack 34 (S126). The processing of S126 may include transmitting a virtual machine image file to the server 22. The OpenStack 34 of the server 22 may generate a virtual machine instance based on the virtual machine image file.

The orchestration server 48 repeatedly queries the server 22 for the installation status (including a generation status of the virtual machine instance) of the OpenStack 34 at predetermined time intervals (for example, 15 minutes) (S128) (S130). When the installation of the OpenStack 34 (including generation of the virtual machine instance) is completed, the server 22 notifies the orchestration server 48 of the successful installation of the OpenStack 34 (S132). The orchestration server 48 notifies the OSS-FS 46 of the successful installation of the OpenStack 34 (S134).

The OSS-FS 46 sets an alert for occurrence of abnormality in the GC 16, and also sets a periodic job (cron job or the like) such as backup in the GC 16 in cooperation with the orchestration server 48 (S136). The OSS-FS 46 executes a test for the VIM 32 installed in a plurality of the servers 22 of the GC 16 (S138). The test includes checking the installation status of the VIM 32 in each of the servers 22.

The OSS-FS 46 generates data of the DHCP pool (IP address pool) indicating a range of the IP address that can be allocated to the communication apparatus of the GC 16 (S140). The OSS-FS 46 transmits the data of the DHCP pool to the orchestration server 48 (S142). The OSS-FS 46 registers the DHCP pool in the network management server 50 (S144). The orchestration server 48 notifies the OSS-FS 46 of the completion of setting the DHCP pool (S146). The OSS-FS 46 installs vRAN functions (that is, the vDU 36 and the vCU 38) in the server 22 (S148). For example, the OSS-FS 46 may transmit a program of the vDU 36 and a program of the vCU 38 to the server 22, and install these programs on the server 22.

In the communication system 10 according to the embodiment, by reducing manual intervention in the setting of the communication apparatus in the GC 16 and thus efficiently setting the communication apparatus in the GC 16, the time required for the setting can be greatly reduced, and a plurality of the GCs scattered all over the country can be set up and validated simultaneously and frequently without a regional limitation. For example, in the communication system 10 according to the embodiment, the setting of the communication apparatus in one GC 16 can be completed in about 9 hours to 10 hours, and this can be executed simultaneously and frequently all over the country.

Furthermore, the communication system 10 according to the embodiment can also be configured to execute the setting of the communication apparatuses in a plurality of the GCs 16 in parallel. For example, the OSS 42 may execute, in parallel, processing of checking whether or not the communication apparatus of each of the GCs 16 is correctly connected to a predetermined counterpart apparatus base on the physical identification information (MAC address or the like) of the communication apparatus of each of the GCs 16, the physical identification information being transmitted from a plurality of the reading apparatuses 28 disposed in a plurality of the GCs 16. That is, the OSS-SF 44 and the OSS-FS 46 may execute the cable matrix check (S48 in Fig. 4) related to a plurality of the GCs 16 in parallel.

Furthermore, in a case where the communication apparatus of each of the GCs 16 is correctly connected to the predetermined counterpart apparatus, the OSS 42 may execute processing of automatically reflecting the setting information of the communication apparatus of each of the GCs 16 to the communication apparatus of each of the GCs 16 in parallel. That is, the OSS-SF 44 and the OSS-FS 46 may execute, in parallel, the automatic commissioning processing (Fig. 5) for the communication apparatus disposed in a plurality of the GCs 16. By executing the setting of the communication apparatuses in a plurality of the GCs 16 in parallel, for example, the setting processing for the GCs 16 of 30 stations to 40 stations can be simultaneously performed.

The present disclosure has been described above based on the embodiment. It is understood by those skilled in the art that the embodiment is an example, various modifications can be made to each constituent element or a combination of processing processes, and such modifications are also within the scope of the technique of the present disclosure.

Any combination of the above-described embodiment and the modifications is also useful as the embodiment of the present disclosure. A new embodiment generated by the combination thereof has the effect of each of the combined embodiments and modifications. Furthermore, it is understood by those skilled in the art that functions to be performed by the constituent elements described in the claims are realized by a single constituent element described in the embodiments and the modifications or in cooperation of the constituent elements.

### [INDUSTRIAL APPLICABILITY]

The technique of the present disclosure can be applied to the apparatus or the system related to the setting of the communication apparatus disposed in the group center (GC) .

### [REFERENCE SIGNS LIST]

10 communication system, 16 GC, 20 TOR, 22 server, 24 OOB, 28 reading apparatus, 40 CDC, 42 OSS, 48 orchestration server

## Claims

1. A computer system comprising:
a reading apparatus disposed in a group center (GC); and
an operation support system disposed in a place different from the GC,
wherein the reading apparatus reads identification information of the communication apparatus from the communication apparatus delivered to the GC, and transmits the identification information of the communication apparatus to the operation support system,
the operation support system checks whether or not the communication apparatus is correctly connected to a predetermined counterpart apparatus based on the identification information of the communication apparatus, the identification information being transmitted from the reading apparatus, and
the operation support system automatically reflects setting information of the communication apparatus to the communication apparatus in a case where the communication apparatus is correctly connected to the predetermined counterpart apparatus.

2. The computer system according to claim 1, wherein the operation support system executes, in parallel, processing of checking whether or not the communication apparatus of each of the GCs is correctly connected to the predetermined counterpart apparatus based on the identification information of the communication apparatus of each of the GCs, the identification information being transmitted from a plurality of the reading apparatuses disposed in a plurality of the GCs, and
the operation support system executes processing of automatically reflecting the setting information of the communication apparatus of each of the GCs to the communication apparatus of each of the GCs in parallel in a case where the communication apparatus of each of the GCs is correctly connected to the predetermined counterpart apparatus.

3. The computer system according to claim 1 or 2, further comprising an orchestration server,
wherein the orchestration server detects that the setting information of the communication apparatus is reflected in the communication apparatus by periodically checking reachability of communication to the communication apparatus,
the orchestration server notifies the operation support system that the setting information of the communication apparatus is reflected in the communication apparatus, and
the operation support system executes an acceptance test including the reachability of the communication to the communication apparatus in a case where the setting information of the communication apparatus is reflected in the communication apparatus.

4. A setting method in a computer system including a reading apparatus disposed in a group center (GC), and an operation support system disposed in a place different from the GC, the method comprising:
a step of causing the reading apparatus to read identification information of a communication apparatus from the communication apparatus delivered to the GC, and transmit the identification information of the communication apparatus to the operation support system,
a step of causing the operation support system to check whether or not the communication apparatus is correctly connected to a predetermined counterpart apparatus based on the identification information of the communication apparatus, the identification information being transmitted from the reading apparatus, and
a step of causing the operation support system to automatically reflect setting information of the communication apparatus to the communication apparatus in a case where the communication apparatus is correctly connected to the predetermined counterpart apparatus.
